# FASCICULE DE BREVET EUROPEEN

(11) **EP 1 399 659 B1**
(45) Date de publication et mention de la délivrance du brevet: **23.08.2006**
(21) Numéro de dépôt: 02745496.6
(22) Date de dépôt: 07.06.2002
(51) Int. Cl.: F02C 3/28, F02C 3/22, F02C 3/20

(54) **PROCEDE ET INSTALLATION DE PRODUCTION D'ENERGIE AU MOYEN D'UNE TURBINE A GAZ ASSOCIEE A UNE ENTITE DE SEPARATION D'AIR**
VERFAHREN UND ANLAGE ZUR ERZEUGUNG VON ELEKTRISCHER ENERGIE DURCH EINE GASTURBINE, DIE MIT EINER LUFTZERLEGUNGSANLAGE VERSEHEN IST
METHOD AND INSTALLATION FOR ENERGY PRODUCTION BY MEANS OF A GAS TURBINE ASSOCIATED WITH AN AIR SEPARATION UNIT

(30) Priorité: 08.06.2001 FR 0107544
(43) Date de publication de la demande: 24.03.2004
(73) Titulaire: L'Air Liquide S. A. à Directoire et Conseil de Surveillance pour l'Etude et l'Exploitation des Procédés Georges Claude, 75321 Paris Cedex 07 (FR)
(72) Inventeur: PEYRON, Jean-Marc, F-94000 Créteil (FR)
(74) Mandataire: Mercey, Fiona Susan
(86) Numéro de dépôt international: PCT/FR2002/001951
(87) Numéro de publication internationale: WO 2002/101216

(56) Documents cités:
- EP-A- 0 773 416
- EP-A- 0 959 314
- GB-A- 2 331 128
- US-A- 5 386 686
- US-A- 5 410 869
- US-A- 5 501 078
- US-A- 5 802 875

## Description

La présente invention concerne un procédé et une installation de production d'énergie au moyen d'une turbine à gaz associée à une unité de séparation d'air.

De façon classique, une turbine à gaz comprend un compresseur, une chambre de combustion, ainsi qu'une turbine de détente, couplée au compresseur pour l'entraînement de ce dernier. Cette chambre de combustion reçoit un gaz de combustion, ainsi qu'une certaine quantité d'azote, destinée à abaisser la température de flamme dans cette chambre de combustion, ce qui permet de minimiser les rejets d'oxydes d'azote à l'atmosphère.

De façon connue, le gaz de combustion peut être obtenu par gazéification, à savoir par oxydation de produits carbonés, tels que du charbon ou bien encore des résidus pétroliers. Cette oxydation est réalisée dans une unité indépendante, dénommée gazéifieur.

De façon classique, il est possible d'associer cette turbine à gaz avec une unité de séparation d'air. Cette dernière, qui est habituellement une unité cryogénique comprenant au moins une colonne de distillation, permet de fournir, à partir d'air, au moins un courant gazeux constitué en majorité par un des gaz de l'air, notamment l'oxygène ou l'azote.

L'association de cette unité de séparation d'air avec la turbine à gaz consiste à tirer parti d'au moins un des deux courants gazeux précités. A cet effet, l'oxygène et l'azote produits dans l'unité de séparation d'air sont admis respectivement dans le gazéifieur et la chambre de combustion.

US-A-5501078 et EP-A-0773416 décrivent des procédés dans lesquels les pressions des gaz comprimés par les compresseurs d'oxygène et d'azote sont constantes.

US-A-5802875 n'a pas de moyen pour agir directement sur le compresseur d'azote mais une vanne en aval de celui-ci qui agit indirectement sur le compresseur pour modifier le débit d'azote.

L'invention se propose de mettre en oeuvre un procédé de ce type, d'une manière particulièrement économique, notamment en termes énergétiques.

A cet effet, elle a pour objet un procédé selon la revendication 1.

Selon d'autres caractéristiques de l'invention :
- le paramètre lié au ou à au moins un desdits courants gazeux est le débit ;
- le courant gazeux est essentiellement formé par de l'oxygène, on admet cet oxygène dans un gazéifieur recevant également des produits carbonés, et la valeur représentative de la change de la turbine est le débit de produits carbonés admis dans le gazéifieur ;
- le courant gazeux est essentiellement formé par de l'azote, on admet ce courant dans la chambre de combustion, et la valeur représentative de la charge de la turbine est le débit de gaz combustible admis dans cette chambre de combustion : de préférence, il n'y a aucune vanne de régulation entre le compresseur et la chambre de combustion ;
- aucun contrôle de la pression d'azote n'est mis en oeuvre au niveau du compresseur ;
- le paramètre lié au ou à au moins un desdits courants gazeux est la pression :

- la valeur représentative de la charge de la turbine est une valeur de pression particulière, régnant à l'admission de la turbine à gaz, notamment dans un circuit de refoulement s'étendant entre un compresseur couplé à ladite turbine et la chambre de combustion ;
- le courant gazeux est essentiellement formé par de l'azote, et on affecte à la pression de ce courant, une première valeur de consigne égale à ladite pression particulière augmentée d'une première valeur de sécurité ;
- la première valeur de sécurité est comprise entre 0,1 et 10 bars, notamment entre 0, 3 et 2 bars ;
- le courant gazeux est essentiellement formé par de l'oxygène, on affecte à la pression d'oxygène, une seconde valeur de consigne égale à ladite pression particulière augmentée d'une seconde valeur de sécurité ;
- la seconde valeur de sécurité est comprise entre 2 et 20 bars, notamment entre 3 et 10 bars ;
- on contrôle également la pression régnant à l'intérieur d'un gazéifieur alimentent la chambre de combustion en gaz combustible, en lui affectant un point de consigne variable en fonction de ladite valeur de pression particulière ;
- la valeur de consigne est égale à ladite pression particulière, à laquelle est ajoutée une troisième valeur de sécurité ;
- la troisième valeur de sécurité est comprise entre 0, 5 et 10 bars, notamment entre 1 et 5 bars.

L'invention a également pour objet une installation selon la revendication 14.

Selon, d'autres caractéristiques de l'invention :
- les moyens de contrôle sont des moyens de contrôle du débit ;
- les moyens de contrôle sont aptes à contrôler le débit d'oxygène s'écoulant dans une ligne débouchant dans un gazéifieur, destiné à alimenter la chambre de combustion, ce gazéifieur étant également mis en communication avec une ligne d'amenée de produits carbonés, et il est prévu des moyens de contrôle du débit des produits carbonés admis dans le gazéifieur, aptes à commander les moyens de contrôle du débit d'oxygène ;
- les moyens de contrôle sont aptes à contrôler le débit d'un courant d'azote s'écoulant dans une conduite débouchant dans la chambre de combustion, mise également en communication avec une conduite d'amenée de gaz combustible, et il est prévu des moyens de contrôle du débit de gaz combustible, aptes à commander les moyens de contrôle du débit du courant d'azote ;
- les moyens de contrôle sont des moyens de contrôle de la pression du ou d'au moins un desdits courants gazeux ;
- il est prévu des moyens de mesure permettant de mesurer une valeur de pression particulière, régnant à l'admission de la turbine à gaz, notamment dans un circuit de refoulement, s'étendant entre un compresseur couplé à la turbine et la chambre de combustion, et sont en outre prévus des moyens de commande permettant d'asservir les moyens de contrôle de la pression aux dits moyens de mesure ;
- il est en outre prévu des moyens de contrôle de la pression du gazéifieur, ainsi que des moyens de commande permettant d'asservir ces moyens de contrôle aux moyens de mesure.

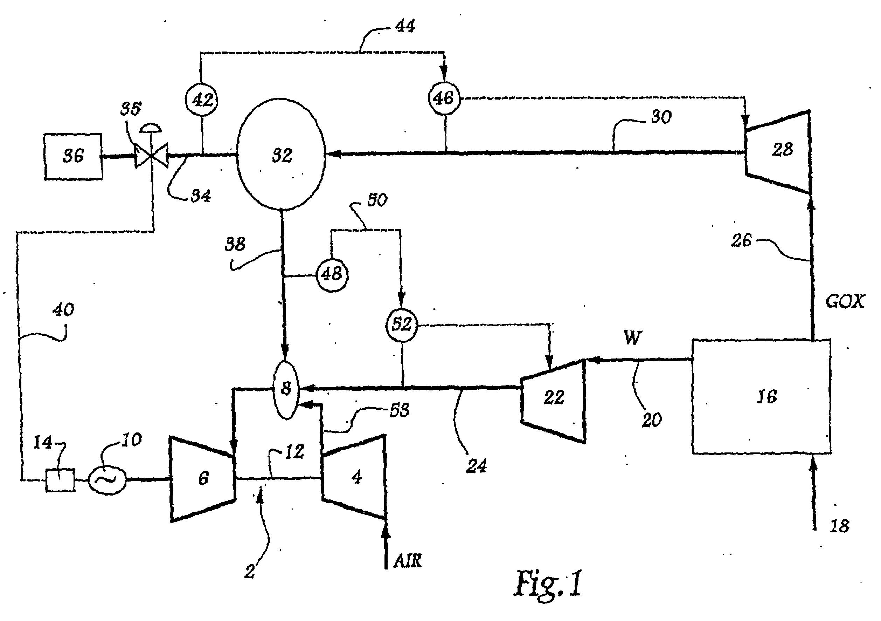

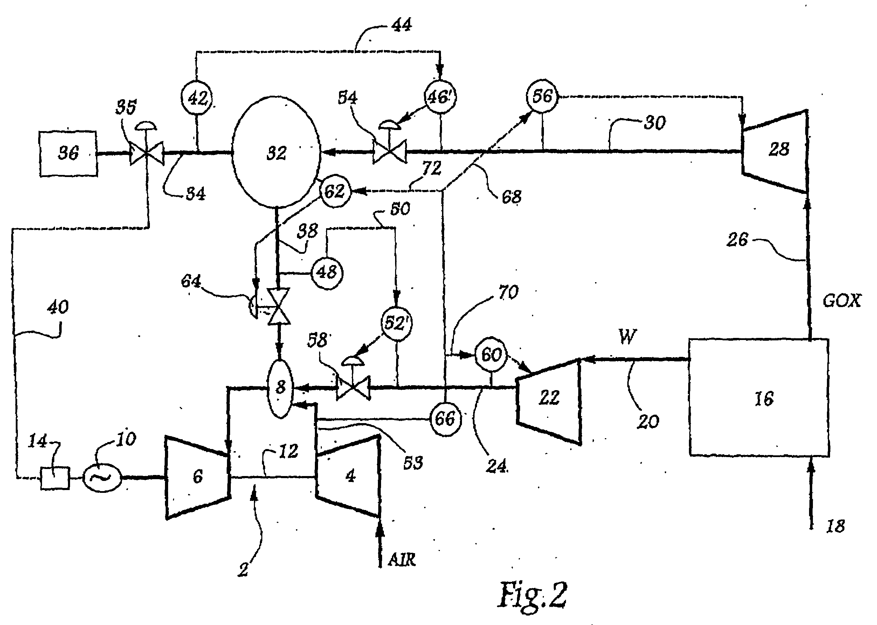

L'invention va être décrite ci-après, en référence aux dessins annexés donnés uniquement à titre d'exemples non limitatifs, dans lesquels les figures 1 et 2 sont des vues schématiques, illustrant des installations conformes à deux modes de réalisation de l'invention.

Sur ces figures, les lignes représentées en traits gras permettent de véhiculer des fluides, alors que les lignes représentées en traits pointillés sont des lignes de commande.

L'installation représentée à la figure 1 comprend une turbine à gaz, désignée dans son ensemble par la référence 2, qui comporte, de façon classique, un compresseur d'air 4, une turbine de détente 6, couplée au compresseur 4, ainsi qu'une chambre de combustion 8.

Cette turbine à gaz 2 est également pourvue d'un alternateur 10, entraîné par un arbre 12, commun au compresseur 4 ainsi qu'à la turbine 6. Un dispositif de mesure de la charge de la turbine à gaz, c'est-à-dire de la demande énergétique qui lui est associée, est illustré par un bloc 14, placé au voisinage de l'alternateur 10.

L'installation de la figure 1 comprend également une unité de séparation d'air, désignée dans son ensemble par la référence 16. Cette dernière, qui est de type connu, est alimentée en air par une conduite 18. Elle opère par cryogénie, et comporte à cet effet plusieurs colonnes de distillation non représentées.

Une ligne 20 permet d'évacuer, hors de l'unité 16, un premier courant W d'azote résiduaire (azote contenant quelques % d'oxygène). Cette ligne 20 débouche dans un compresseur 22, en aval duquel s'étend une conduite 24 qui débouche dans la chambre de combustion 8.

Par ailleurs, une ligne 26 permet l'évacuation, hors de l'unité 16, d'un courant gazeux GOX riche en oxygène. Cette ligne 26 débouche dans un compresseur 28, en aval duquel s'étend une conduite 30. Cette dernière débouche dans un gazéifieur 32, de type classique, qui est également alimenté, via une ligne 34 munie d'une vanne de réglage 35, par un réservoir 36 contenant des produits carbonés, tels que du charbon.

Une conduite 38, qui s'étend en aval du gazéifieur 32, véhicule le gaz combustible issu de l'oxydation des produits carbonés précités. Cette conduite 38 est mise en communication avec la chambre de combustion 8 de la turbine à gaz.

Le dispositif 14 de mesure de la charge est relié à la vanne 35, par une ligne de commande 40. Ceci signifie, en d'autres termes, qu'une augmentation de la charge 14 implique une augmentation du débit de produits carbonés véhiculés dans la ligne 34. Par ailleurs, cette dernière est pourvue d'un dispositif de contrôle du débit 42, qui est mis en relation, via une ligne de commande 44, avec un dispositif 46 permettant le contrôle du débit d'oxygène dans la conduite 30.

Enfin, la conduite 38 est équipée d'un dispositif 48 permettant de contrôler le débit du gaz combustible qui y circule. Le dispositif 48 est mis en relation, via une ligne de commande 50, avec un dispositif 52 permettant de contrôler le débit d'azote résiduaire s'écoulant dans la conduite 24.

Le fonctionnement général de l'installation de la figure 1 va maintenant être décrit.

En fonction de la charge de la turbine à gaz, un certain débit de produits carbonés est admis dans le gazéifieur 32, par la ligne 34. De l'oxygène est par ailleurs admis dans le gazéifieur, de manière à produire du gaz combustible, délivré par la conduite 38. Il existe un ratio de combustion prédéterminé R1, entre les débits respectifs de produits carbonés et d'oxygène.

Le gaz combustible, véhiculé par la conduite 38, débouche dans la chambre de combustion 8 de la turbine à gaz. Cette chambre de combustion reçoit par ailleurs de l'azote résiduaire, provenant de la conduite 24. On dénomme R2 le ratio de dilution, correspondant au rapport entre les débits de gaz combustible et d'azote résiduaire.

La chambre de combustion 8 reçoit par ailleurs, via une conduite 53, de l'air comprimé provenant du compresseur 4. Les gaz issus de la combustion correspondante, mélangée à l'azote résiduaire, sont envoyés vers l'admission de la turbine de détente 6, où ils se détendent en entraînant cette dernière . Ceci permet également, via l'arbre 12, l'entraînement du compresseur 4 ainsi que de l'alternateur 10, qui alimente par exemple un réseau de distribution électrique non représenté.

Lorsque la charge de la turbine à gaz 2 varie, ceci provoque une variation correspondante du débit de produits carbonés s'écoulant dans la ligne 34. Ce débit est contrôlé par l' intermédiaire du dispositif 42, qui envoie alors, par la ligne 44, un ordre au dispositif de contrôle 46, de sorte que le débit d'oxygène dans la conduite 30 soit ajusté de façon correspondante, afin que le ratio de combustion R1 soit conservé.

Le dispositif de contrôle de débit 46 agit directement sur le compresseur 28, de façon connue en soi, par exemple au niveau des aubes de ce dernier. Il convient de noter qu'aucun contrôle de la pression n'est opéré en sortie de ce compresseur 28. Par ailleurs, aucune vanne n'est nécessaire sur la conduite 30.

Ainsi, la pression d'oxygène s'écoulant dans la conduite 30 s'établit de façon spontanée, en fonction notamment de la caractéristique de la turbine à gaz, ainsi que de celle du compresseur 28.

Le débit d'oxygène circulant dans la conduite 30 est donc affecté d'un point de consigne variable en fonction du débit de produits carbonés véhiculés par la ligne 34, ce dernier débit étant lui-même commandé par la charge de la turbine et donc représentatif de celle-ci.

En outre, lors d'une telle variation de la charge, le débit de gaz combustible s'écoulant dans la conduite 38 varie de façon correspondante, du fait des variations des débits de produits carbonés et d'oxygène. Le contrôle du débit de gaz combustible est assuré par le dispositif 48, qui envoie alors, par la ligne 50, un ordre au dispositif 52, de sorte que ce dernier contrôle le débit d'azote résiduaire s'écoulant dans la ligne 24, afin que le ratio R2 soit conservé. Le dispositif de contrôle 52 agit directement sur le compresseur 22, de façon analogue à ce qui a été décrit en ce qui concerne le dispositif 46 et le compresseur 28.

Comme dans le cas du compresseur 28, il convient de noter qu'aucun contrôle de la pression d'azote résiduaire n'est mis en oeuvre au niveau du compresseur 22. Cette dernière s'établit donc de façon spontanée, notamment en fonction des caractéristiques de la turbine à gaz et du compresseur 22. En outre, aucune vanne n'est nécessaire sur la ligne 24.

Le débit d'azote résiduaire, circulant dans la ligne 24, est donc affecté d'une valeur de consigne variable en fonction du débit de gaz combustible, ce dernier débit étant lui-même représentatif de la charge de la turbine.

La figure 2 illustre une variante de réalisation de l'invention.

Cette variante diffère de l'installation de la figure 1, en ce que le dispositif de contrôle 46', analogue à celui 46, agit non pas sur le compresseur 28, mais sur une vanne d'injection 54, placée sur la conduite 30. Par ailleurs, cette conduite 30 est équipée d'un dispositif 56, agissant sur le compresseur 28, en vue du contrôle de la pression d'oxygène.

L'installation de la figure 2 diffère également de celle de la figure 1, en ce que le dispositif 52' de contrôle du débit, analogue à celui 52, agit non pas sur le compresseur 22, mais sur une vanne 58 placée sur la conduite 24. Cette conduite 24 est en outre munie d'un dispositif 60 de contrôle de la pression d'azote résiduaire, agissant directement sur le compresseur 22.

L'installation de la figure 2 diffère enfin de celle de la figure 1, en ce que le gazéifieur 32 est pourvu d'un dispositif 62 permettant de contrôler la pression régnant à l'intérieur de ce gazéifieur. Ce dispositif 62 agit sur une vanne 64, équipant la conduite 38 de gaz combustible.

Les consignes affectées aux différents dispositifs de contrôle 56, 60 et 62 possèdent une valeur variable en fonction de la charge de la turbine à gaz.

A cet effet, on mesure, au moyen d'un capteur 66, la pression du circuit de refoulement d'air, qui met en communication le compresseur 4 avec la chambre de combustion 8. Les points de consigne des dispositifs 56, 60 et 62 correspondent alors à la valeur de pression ainsi mesurée par le capteur 66, à laquelle sont ajoutées des valeurs de sécurité ΔP. A cet effet, ces dispositifs 56, 60 et 62 sont reliés au capteur 66 par des lignes de commande respectives, affectées des références 68, 70 et 72.

A titre d'exemple, le point de consigne du dispositif de contrôle 60 de la pression d'azote résiduaire correspond à la pression P. mesurée par le capteur 66, à laquelle est ajoutée une valeur de sécurité ΔP1 comprise entre 0,1 et 10 bars, de préférence entre 0,3 et 2 bars.

La valeur de consigne du dispositif 56 de contrôle de la pression d'oxygène correspond à la valeur mesurée par le capteur 66, à laquelle est ajoutée une valeur de sécurité ΔP2 comprise entre 2 et 20 bars, de préférence entre 3 et 10 bars.

Enfin, la valeur de la consigne du dispositif 62 de contrôle de la pression du gazéifieur correspond à la valeur mesurée par le capteur 66, à laquelle est ajoutée une valeur de sécurité ΔP3 comprise entre 0,5 et 10 bars, de préférence entre 1 et 5 bars.

Les trois valeurs de consigne, évoquées ci-dessus, sont donc variables en fonction de la pression du circuit de refoulement, cette pression étant elle-même représentative de la charge de la turbine. Il est envisageable de faire varier ces valeurs de consigne, en fonction de pressions régnant en d'autres points de l'installation. Ainsi, un capteur non représenté, analogue à celui 66, peut être prévu dans la chambre de combustion 8.

L'invention n'est pas limitée aux exemples décrits et représentés.

Ainsi, il est envisageable de contrôler le débit d'un unique courant gazeux, à savoir l'azote ou l'oxygène, selon les étapes décrites en référence à la figure 1. Dans ce cas, on peut procéder à un contrôle de la pression de l'autre courant gazeux, conformément à l'exemple décrit en référence à la figure 2.

Il est également possible d'alimenter la chambre de combustion 8, en utilisant un unique courant gazeux provenant de l'unité de séparation d'air. Ainsi, seul l'azote résiduaire, produit par cette unité de séparation, peut être employée le gaz de combustion étant par exemple du gaz naturel.

L'invention permet de réaliser les objectifs précédemment mentionnés.

En effet, la Demanderesse a constaté que la mise en oeuvre de l'art antérieur implique une consommation énergétique particulièrement élevée. Ceci est principalement dû au fait que les compresseurs d'azote et d'oxygène, placés, en aval de l'unité de séparation d'air, sont soumis à des valeurs de consigne constantes, en ce qui concerne leur pression de sortie qui doit rester constante, de même que le gazéifieur.

Or, lors d'une marche réduite de la turbine à gaz, la pression régnant dans la chambre de combustion est notablement réduite. De la sorte, dans l'art antérieur faisant appel à des valeurs de consigne constantes, il se produit une détente très sensible de l'azote, de l'oxygène et du gaz de synthèse dans les vannes d'injection, ce qui induit un gaspillage d'énergie considérable.

En revanche, faire varier la pression et/ou le débit d'oxygène et/ou d'azote, en fonction de la charge de la turbine, permet de réduire de façon notable l'amplitude des détentes subies par ces gaz.

En particulier, le fait de contrôler le débit de ces courants gazeux permet de s'affranchir des pertes de charge inhérentes à l'utilisation des vannes d'injection. En effet, conformément à ce mode de réalisation de l'invention, les vannes précitées peuvent être supprimées, ou bien n'avoir aucune influence sur la mise en oeuvre de l'installation puisqu'elles se trouvent totalement ouvertes.

## Revendications

1. Procédé de production d'énergie au moyen d'une turbine à gaz (2) associée à une unité de séparation d'air (16), dans lequel on admet (par 18) de l'air dans ladite unité de séparation (16), on extrait de ladite unité de séparation au moins un courant gazeux (par 20, 26), essentiellement constitué par un gaz de l'air, qui est de l'oxygène ou de l'azote, et on dirige le courant gazeux vers une chambre de combustion (8) de la turbine à gaz (2) dans le cas de l'azote ou vers un gazéifieur (32) dans le cas de l'oxygène, on contrôle au moins un paramètre lié au ou à chaque courant gazeux, en agissant directement sur un compresseur (22, 28) de ce courant gazeux disposé en aval de ladite unité de séparation d'air (16) en modifiant les aubes du compresseur ou en modifiant la vitesse d'une turbine qui l'entraîne et on affecte au ou à chaque paramètre une valeur de consigne variable, en fonction d'une valeur représentative de la charge de la turbine à gaz (2).

2. Procédé selon la revendication 1, **caractérisé en ce que** le paramètre lié au ou à au moins un desdits courants gazeux est le débit.

3. Procédé selon la revendication 2, **caractérisé en ce que** le courant gazeux est essentiellement formé par de l'oxygène, **en ce qu'**on admet cet oxygène (par 30) dans le gazéifieur (32) recevant également (par 34) des produits carbonés, et **en ce que** la valeur représentative de la charge de la turbine (2) est le débit de produits carbonés admis dans le gazéifieur (32).

4. Procédé selon la revendication 2 ou 3, **caractérisé en ce que** le courant gazeux est essentiellement formé par de l'azote, **en ce qu'**on admet ce courant dans la chambre de combustion (8), et **en ce que** la valeur représentative de la charge de la turbine (2) est le débit de gaz combustible admis (par 38) dans cette chambre de combustion.

5. Procédé selon l'une des revendications précédentes, **caractérisé en ce que** le paramètre lié au ou à au moins un desdits courants gazeux est la pression.

6. Procédé selon la revendication 5, **caractérisé en ce que** la valeur représentative de la charge de la turbine est une valeur de pression particulière, régnant à l'admission de la turbine à gaz (2), notamment dans un circuit de refoulement (53) s'étendant entre un compresseur (4) couplé à ladite turbine et la chambre de combustion (8).

7. Procédé selon les revendications 5 et 6, **caractérisé en ce que** le courant gazeux est essentiellement formé par de l'azote, et **en ce qu'**on affecte à la pression de ce courant, une première valeur de consigne égale à ladite pression particulière augmentée d'une première valeur de sécurité (ΔP1).

8. Procédé selon la revendication 7, **caractérisé en ce que** la première valeur de sécurité (ΔP1) est comprise entre 0,1 et 10 bars, notamment entre 0,3 et 2 bars.

9. Procédé selon les revendications 5 et 6, **caractérisé en ce que** le courant gazeux est essentiellement formé par de l'oxygène, et **en ce qu'**on affecte à la pression d'oxygène, une seconde valeur de consigne égale à ladite pression particulière augmentée d'une seconde valeur de sécurité (ΔP2).

10. Procédé selon la revendication 9, **caractérisé en ce que** la seconde valeur de sécurité (ΔP2) est comprise entre 2 et 20 bars, notamment entre 3 et 10 bars.

11. procédé selon l'une des revendications 6 à 10, **caractérisé en ce qu'**on contrôle également la pression régnant à l'intérieur d'un gazéifieur (32) alimentant la chambre de combustion (8) en gaz combustible, en lui affectant un point de consigne variable en fonction de ladite valeur de pression particulière.

12. procédé selon la revendication 11, **caractérisé en ce que** ladite valeur de consigne est égale à ladite pression particulière, à laquelle est ajoutée une troisième valeur de sécurité (ΔP3).

13. Procédé selon la revendication 12, **caractérisé en ce que** la troisième valeur de sécurité (ΔP3) est comprise entre 0.5 et 10 bars, notamment entre 1 et 5 bars.

14. Installation de production d'énergie au moyen d'une turbine à gaz (2) associée à une unité de séparation d'air (16), cette installation comprenant des moyens permettant d'extraire de l'unité de séparation au moins un courant gazeux essentiellement constitué par un gaz de l'air, qui est de l'oxygène ou de l'azote, et des moyens d'amenée (20, 26) du courant gazeux en direction d'une chambre de combustion (8) de la turbine à gaz (2) dans le cas de l'azote ou vers un gazéifieur (32) dans le cas de l'oxygène, **caractérisée en ce qu'**il est prévu des moyens de contrôle (46, 52 ; 56, 60) d'au moins un paramètre lié au ou à chaque courant gazeux, aptes à agir directement sur un compresseur (22, 28) de ce courant gazeux en modifiant les aubes du compresseur ou en modifiant la vitesse d'une turbine qui l'entraîne, lesdits moyens de contrôle possédant une valeur de consigne variable, en fonction d'une valeur représentative de la charge (14) de la turbine à gaz.

15. Installation selon la revendication 14, **caractérisée en ce que** les moyens de contrôle sont des moyens de contrôle du débit (46, 52).

16. Installation selon la revendication 15, **caractérisée en ce que** les moyens de contrôle (46) sont aptes à contrôler le débit d'oxygène s'écoulant dans une ligne (30) débouchant dans un gazéifieur (32), destiné à alimenter la chambre de combustion (8), ce gazéifieur (32) étant également mis en communication avec une ligne d'amenée de produits carbonés (34), et **en ce qu**'il est prévu des moyens (42) de contrôle du débit des produits carbonés admis dans le gazéifieur, aptes à commander les moyens (46) de contrôle du débit d'oxygène;

17. Installation selon la revendication 15 ou 16, **caractérisée en ce que** les moyens de contrôle (52) sont aptes à contrôler le débit d'un courant d'azote s'écoulant dans une conduite (24) débouchant dans la chambre de combustion (8), mise également en communication avec une conduite (38) d'amenée de gaz combustible, et **en ce qu'**il est prévu des moyens (48) de contrôle du débit de gaz combustible, aptes à commander les moyens de contrôle (52) du débit du courant d'azote.

18. Installation selon l'une des revendications 14 à 17, **caractérisée en ce que** les moyens de contrôle sont des moyens de contrôle de la pression (56, 60) du ou d'au moins un desdits courants gazeux.

19. installation selon la revendication 18, **caractérisée en ce qu'**il est prévu des moyens de mesure (66) permettant de mesurer une valeur de pression particulière, régnant à l'admission de la turbine à gaz (2), notamment dans un circuit de refoulement (53), s'étendant entre un compresseur (4) couplé à la turbine et la chambre de combustion (8), et **en ce que** sont en outre prévus des moyens de commande (68, 70) permettant d'asservir les moyens de contrôle de la pression (56, 60) aux dits moyens de mesure (66).

20. Installation selon la revendication 19, **caractérisée en ce qu'**il est en outre prévu des moyens (62) de contrôle de la pression du gazéifieur, ainsi que des moyens de commande (72) permettant d'asservir ces moyens de contrôle (62) aux moyens de mesure (66).

## Claims

1. Method for producing energy using a gas turbine (2) associated with an air separation unit (16), in which method air is admitted (via 18) into said separation unit (16), at least one gaseous stream essentially consisting of an air gas, which is oxygen or nitrogen, is extracted from said separation unit (via 20, 26), and the gaseous stream is directed towards a combustion chamber (8) of the gas turbine (2), in the case of nitrogen, or towards a gasifier (32) in the case of oxygen, at least one parameter associated with the or each gaseous stream is controlled by direct action on a compressor (22, 28) for this gaseous stream which is located downstream of said air separation unit (16) by modifying the vanes of the compressor or by modifying the speed of a turbine which it drives, and a variable setpoint value that varies as a function of a value representative of the load on the gas turbine (2) is assigned to the or each parameter.

2. Method according to Claim 1, **characterized in that** the parameter associated with said or with at least one of said gaseous streams is the flow rate.

3. Method according to Claim 2, **characterized in that** the gaseous stream is essentially formed of oxygen, **in that** this oxygen is admitted (via 30) into the gasifier (32) that also receives (via 34) carbon-containing products, and **in that** the value representative of the load on the turbine (2) is the flow rate of carbon-containing products admitted into the gasifier (32).

4. Method according to Claim 2 or 3, **characterized in that** the gaseous stream is essentially formed of nitrogen, **in that** this stream is admitted into the combustion chamber (8), and **in that** the value representative of the load on the turbine (2) is the flow rate of fuel gas admitted (via 38) into this combustion chamber.

5. Method according to one of the preceding claims, **characterized in that** the parameter associated with said or with at least one of said gaseous streams is the pressure.

6. Method according to Claim 5, **characterized in that** the value representative of the load on the turbine is a specific pressure value on the intake side of the gas turbine (2), particularly in a delivery circuit (53) running between a compressor (4) coupled to said turbine and the combustion chamber (8).

7. Method according to Claims 5 and 6, **characterized in that** the gaseous stream is essentially formed by nitrogen and **in that** a first setpoint value equal to said particular pressure increased by a first safety value (ΔP1) is assigned to the pressure of this stream.

8. Method according to Claim 7, **characterized in that** the first safety value (ΔP1) is between 0.1 and 10 bar, particularly between 0.3 and 2 bar.

9. Method according to Claims 5 and 6, **characterized in that** the gaseous stream is essentially formed of oxygen, and **in that** a second setpoint value equal to said particular pressure increased by a second safety value (ΔP2) is assigned to the oxygen pressure.

10. Method according to Claim 9, **characterized in that** the second safety value (ΔP2) is between 2 and 20 bar, particularly between 3 and 10 bar.

11. Method according to one of Claims 6 to 10, **characterized in that** the pressure inside a gasifier (32) feeding the combustion chamber (8) with fuel gas is also controlled by assigning to it a variable setpoint point that varies as a function of said particular pressure value.

12. Method according to Claim 11, **characterized in that** said setpoint value is equal to said particular pressure, to which a third safety value (ΔP3) is added.

13. Method according to Claim 12, **characterized in that** the third safety value (ΔP3) is between 0.5 and 10 bar, particularly between 1 and 5 bar.

14. Installation for producing energy by means of a gas turbine (2) associated with an air separation unit (16), this installation comprising means allowing at least one gaseous stream essentially consisting of an air gas, which is oxygen or nitrogen, to be extracted from the separation unit, and means (20, 26) for conveying the gaseous stream towards a combustion chamber (8) of the gas turbine (2) in the case of nitrogen or towards a gasifier (32) in the case of oxygen, **characterized in that** control means (46, 52; 56, 60) are provided for controlling at least one parameter associated with the or with each gaseous stream, these means being able to act directly on a compressor (22, 28) for this gaseous stream by modifying the vanes of the compressor or by modifying the speed of a turbine which it drives, said control means having a variable setpoint value that varies as a function of a value representative of the load (14) on the gas turbine.

15. Installation according to Claim 14, **characterized in that** the control means are means (46, 52) for controlling the flow rate.

16. Installation according to Claim 15, **characterized in that** the control means (46) are able to control the flow rate of oxygen flowing along a line (30) emerging into a gasifier (32) intended to feed the combustion chamber (8), this gasifier (32) also being placed in communication with a line (34) for conveying carbon-containing products, and **in that** means (42) are provided for controlling the flow rate of the carbon-containing products admitted to the gasifier, these means being able to control the means (46) for controlling the oxygen flow rate.

17. Installation according to Claim 15 or 16, **characterized in that** the control means (52) are able to control the flow rate of a stream of nitrogen flowing along a pipe (24) opening into the combustion chamber (8), also placed in communication with a pipe (38) for conveying fuel gas, and **in that** means (48) are provided for controlling the flow rate of fuel gas, these means being able to control the means (52) for controlling the flow rate of the stream of nitrogen.

18. Installation according to one of Claims 14 to 17, **characterized in that** the control means are means (56, 60) for controlling the pressure of said or at least one of said gaseous streams.

19. Installation according to Claim 18, **characterized in that** measurement means (66) are provided for measuring a particular pressure value on the inlet side of the gas turbine (2), particularly in a delivery circuit (53) running between a compressor (4) coupled to the turbine and the combustion chamber (8), and **in that** operating means (68, 70) are also provided so that the means (56, 60) for controlling the pressure can be slaved to said measurement means (66).

20. Installation according to Claim 19, **characterized in that** means (62) are also provided for controlling the pressure of the gasifier, together with operating means (72) allowing these control means (62) to be slaved to the measurement means (66).

## Patentansprüche

1. Verfahren zur Erzeugung von Energie durch eine Gasturbine (2), die mit einer Luftzerlegungseinheit (16) verbunden ist, wobei Luft (durch 18) in die Zerlegungseinheit (16) eingelassen wird, mindestens eine Gasströmung aus der Zerlegungseinheit entzogen wird (durch 20, 26), welche sich im wesentlichen aus einem Luftgas, bestehend aus Sauerstoff und Stickstoff, zusammensetzt und die Gasströmung im Fall von Stickstoff in eine Brennkammer (8) der Gasturbine (2) oder im Fall von Sauerstoff in einen Vergaser (32) geleitet wird, mindestens ein mit der Strömung oder jeder der Strömungen verbundener Parameter kontrolliert wird, wobei in direkter Weise auf einen Verdichter (22, 28) der Gasströmung, welcher der Luftzerlegungseinheit (16) nachgelagert ist, durch Veränderung der Kompressorschaufeln oder durch Veränderung der Geschwindigkeit der diesen antreibenden Turbine eingewirkt wird und dem oder jedem der Parameter ein variabler Sollwert zugewiesen wird, in Abhängigkeit von einem Wert, der für die Beschikkung der Gasturbine (2) repräsentativ ist.

2. Verfahren nach Anspruch 1, **dadurch gekennzeichnet, dass** der mit der oder mindestens einer der Gasströmungen verbundene Parameter der Durchsatz ist.

3. Verfahren nach Anspruch 2, **dadurch gekennzeichnet, dass** die Gasströmung im Wesentlichen aus Sauerstoff gebildet wird, dass der Sauerstoff (durch 30) in den Vergaser (32), der ebenso (durch 34) Kohlenstoffprodukte aufnimmt, eingelassen wird und dass der für die Beschickung der Gasturbine (2) repräsentative Wert der Durchsatz der Kohlenstoffprodukte ist, die in den Vergaser (32) eingelassen werden.

4. Verfahren nach Anspruch 2 oder 3, **dadurch gekennzeichnet, dass** die Gasströmung im Wesentlichen aus Stickstoff gebildet wird, dass die Strömung in die Brennkammer (8) eingelassen wird und dass der für die Beschickung der Gasturbine (2) repräsentative Wert der Durchsatz des Brenngases ist, welches (durch 38) in die Brennkammer eingelassen wird.

5. Verfahren nach einem der vorherigen Ansprüche, **dadurch gekennzeichnet, dass** der mit der oder mindestens einer der Gasströmungen verbundene Parameter der Druck ist.

6. Verfahren nach Anspruch 5, **dadurch gekennzeichnet, dass** der mit der Turbinenbeschickung verbundene Wert ein Wert des Partialdrucks ist, der beim Einlass der Gasturbine (2) herrscht, insbesondere in einer Druckleitung (53), die sich zwischen einem an die Turbine angeschlossenen Kompressor (4) und der Brennkammer (8) erstreckt.

7. Verfahren nach Anspruch 5 und 6, **dadurch gekennzeichnet, dass** die Gasströmung im Wesentlichen aus Stickstoff gebildet wird und dass dem Druck der Strömung ein erster Sollwert zugewiesen wird, welcher dem Partialdruck erhöht um einen ersten Sicherheitswert (ΔP1) entspricht.

8. Verfahren nach Anspruch 7, **dadurch gekennzeichnet, dass** der erste Sicherheitswert (ΔP1) zwischen 0,1 und 10 bar, insbesondere zwischen 0,3 und 2 bar beträgt.

9. Verfahren nach Anspruch 5 und 6, **dadurch gekennzeichnet, dass** die Gasströmung im Wesentlichen aus Sauerstoff gebildet wird und dass dem Sauerstoffdruck ein zweiter Sollwert zugewiesen wird, welcher dem Partialdruck erhöht um einen zweiten Sicherheitswert (ΔP2) entspricht.

10. Verfahren nach Anspruch 9, **dadurch gekennzeichnet, dass** der zweite Sicherheitswert (ΔP2) zwischen 2 und 20 bar, insbesondere zwischen 3 und 10 bar beträgt.

11. Verfahren nach einem der Ansprüche 6 bis 10, **dadurch gekennzeichnet, dass** ebenfalls der Druck geprüft wird, welcher im Innern eines Vergasers (32) herrscht, der die Brennkammer (8) mit Brenngas versorgt, wobei diesem ein variabler Sollwert in Abhängigkeit von dem Wert des Partialdrucks zugewiesen wird.

12. Verfahren nach Anspruch 11, **dadurch gekennzeichnet, dass** der Sollwert dem Partialdruck, dem ein dritter Sicherheitswert (ΔP3) hinzugefügt wird, entspricht.

13. Verfahren nach Anspruch 12, **dadurch gekennzeichnet, dass** der dritte Sicherheitswert (ΔP3) zwischen 0,5 und 10 bar, insbesondere zwischen 1 und 5 bar beträgt.

14. Anlage zur Erzeugung von Energie durch eine Gasturbine (2), die mit einer Luftzerlegungseinheit (16) verbunden ist, wobei die Anlage Mittel zum Entzug mindestens einer Gasströmung aus der Zerlegungseinheit umfasst, die sich im wesentlichen aus einem Luftgas, bestehend aus Sauerstoff oder Stickstoff, zusammensetzt sowie Mittel zum Leiten (20, 26) der Gasströmung im Fall von Stickstoff in Richtung einer Brennkammer (8) der Gasturbine (2) oder im Fall von Sauerstoff zu einem Vergaser (32), **dadurch gekennzeichnet, dass** sie mit Kontrollinstrumenten (46, 52; 56, 60) mindestens eines Parameters versehen ist, welcher mit der Strömung oder jeder der Strömungen verbunden ist, der geeignet ist, in direkter Weise auf einen Kompressor (22, 28) der Gasströmung, durch Veränderung der Kompressorschaufeln oder durch Veränderung der Geschwindigkeit der diesen antreibenden Turbine einzuwirken, wobei die Kontrollinstrumente einen variablen Sollwert in Abhängigkeit von einem Wert aufweisen, der für die Beschickung (14) der Gasturbine repräsentativ ist.

15. Anlage nach Anspruch 14, **dadurch gekennzeichnet, dass** es sich bei den Kontrollinstrumenten um Kontrollinstrumente des Durchsatzes (46, 52) handelt.

16. Anlage nach Anspruch 15, **dadurch gekennzeichnet, dass** die Kontrollinstrumente (46) geeignet sind, den Sauerstoffdurchsatz zu überprüfen, der über eine Leitung (30), die in den Vergaser (32) mündet, abfließt, welche zur Versorgung der Brennkammer (8) bestimmt ist, wobei der Vergaser (32) ebenfalls mit einer Leitung zur Zuführung von Kohlenstoffprodukten (34) verbunden ist und **dadurch**, dass sie mit Kontrollinstrumenten (42) des Durchsatzes der in den Vergaser eingelassenen Kohlenstoffprodukte versehen ist, welche geeignet sind, die Kontrollinstrumente (46) des Sauerstoffdurchsatzes zu steuern.

17. Anlage nach Anspruch 15 oder 16, **dadurch gekennzeichnet, dass** die Kontrollinstrumente (52) geeignet sind, den Durchsatz einer Stickstoffströmung zu überprüfen, die über eine Leitung (24) abfließt, die in die Brennkammer (8) mündet, die ebenfalls mit einer Leitung (38) zur Zuführung von Brenngas verbunden ist und **dadurch**, dass sie mit Kontrollinstrumenten (48) des Durchsatzes des Brenngases versehen ist, welche geeignet sind, die Kontrollinstrumente (52) des Durchsatzes der Stickstoffströmung zu steuern.

18. Anlage nach einem der Ansprüche 14 bis 17, **dadurch gekennzeichnet, dass** die Kontrollinstrumente Druckkontrollinstrumente (55, 60) der oder mindestens einer der Gasströmungen sind.

19. Anlage nach Anspruch 18, **dadurch gekennzeichnet, dass** sie mit Messinstrumenten (66) versehen ist, welche die Messung eines Wertes des Partialdrucks gestatten, der beim Einlass der Gasturbine (2) herrscht, insbesondere in einer Druckleitung (53), die sich zwischen einem an die Turbine angeschlossenen Kompressor (4) und der Brennkammer (8) erstreckt und **dadurch**, dass ferner Steuerinstrumente (68, 70) vorgesehen sind, welche es gestatten, die Druckkontrollinstrumente (56, 60) den Messinstrumenten (66) unterzuordnen.

20. Anlage nach Anspruch 19, **dadurch gekennzeichnet, dass** sie ferner mit Druckkontrollinstrumenten (62) des Vergasers versehen ist sowie mit Steuerinstrumenten (72), welche es gestatten, die Kontrollinstrumente (62) den Messinstrumenten (66) unterzuordnen.
